# EUROPÄISCHE PATENTSCHRIFT

(11) **EP 1 283 338 B1**
(45) Veröffentlichungstag und Bekanntmachung des Hinweises auf die Patenterteilung: **30.03.2005**
(21) Anmeldenummer: 01119261.4
(22) Anmeldetag: 09.08.2001
(51) Int. Cl.: F02C 7/18

(54) **Gasturbine und Verfahren zum Betreiben einer Gasturbine**
Gas turbine and method for operating a gas turbine
Turbine à gaz et procédé de fonctionnement d'une turbine à gaz

(43) Veröffentlichungstag der Anmeldung: 12.02.2003
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- US-A- 3 446 482
- US-A- 4 338 780
- US-A- 4 614 083
- US-A- 5 758 487
- US-A- 6 019 579
- US-A- 6 065 282
- US-A- 6 065 931
- PATENT ABSTRACTS OF JAPAN vol. 1997, no. 02, 28. Februar 1997 (1997-02-28) & JP 08 284687 A (MITSUBISHI HEAVY IND LTD), 29. Oktober 1996 (1996-10-29)
- PATENT ABSTRACTS OF JAPAN vol. 009, no. 011 (M-351), 18. Januar 1985 (1985-01-18) & JP 59 160032 A (KOGYO GIJUTSUIN;OTHERS: 0J), 10. September 1984 (1984-09-10)
- PATENT ABSTRACTS OF JAPAN vol. 1997, no. 07, 31. Juli 1997 (1997-07-31) & JP 09 060531 A (MITSUBISHI HEAVY IND LTD), 4. März 1997 (1997-03-04)
- PATENT ABSTRACTS OF JAPAN vol. 009, no. 011 (M-351), 18. Januar 1985 (1985-01-18) & JP 59 160034 A (KOGYO GIJUTSUIN;OTHERS: 0J), 10. September 1984 (1984-09-10)

## Beschreibung

Die Erfindung bezieht sich auf eine Gasturbine mit einer Anzahl von jeweils zu Schaufelreihen zusammengefaßten Turbinenschaufeln, die jeweils einen integrierten Kühlluftkanal aufweisen. Sie betrifft weiter ein Verfahren zum Betreiben einer derartigen Gasturbine.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter ho-, hem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise in Schaufelgruppen oder Schaufelreihen zusammengefaßten Laufschaufeln angeordnet, die über einen Impulsübertrag aus dem Arbeitsmedium die Turbinenwelle antreiben. Zur Führung des Arbeitsmediums in der Turbineneinheit sind zudem üblicherweise zwischen benachbarten Laufschaufelreihen mit dem Turbinengehäuse verbundene Leitschaufelreihen angeordnet.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades läßt sich dabei aus thermodynamischen Gründen grundsätzlich durch eine Erhöhung der Austrittstemperatur erreichen, mit dem das Arbeitsmedium aus der Brennkammer ab- und in die Turbineneinheit einströmt. Daher werden Temperaturen von etwa 1200 °C bis 1300 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere von Lauf- und/oder Leitschaufeln der Turbineneinheit, vorgesehen. Die Turbinenschaufeln sind daher üblicherweise kühlbar ausgebildet, wobei insbesondere eine wirksame und zuverlässige Kühlung der in Strömungsrichtung des Arbeitsmediums gesehen ersten Schaufelreihen sichergestellt sein soll. Zur Kühlung weist die jeweilige Turbinenschaufel dabei üblicherweise einen in das Schaufelblatt oder das Schaufelprofil integrierten Kühlmittelkanal auf, von dem aus ein Kühlmittel gezielt insbesonderte den thermisch belasteten Zonen der Turbinenschaufel zuleitbar ist.

Als Kühlmittel kommt dabei üblicherweise Kühlluft zum Einsatz. Diese wird der jeweiligen Turbinenschaufel üblicherweise in der Art einer offenen Kühlung über einen integrierten Kühlmittelkanal zugeführt. Von diesem ausgehend durchströmt die Kühlluft in abzweigenden Kanälen die jeweils vorgesehenen Bereiche der Turbinenschaufel. Austrittsseitig sind diese Kanäle offen gelassen, so daß die Kühlluft nach dem Durchströmen der Turbinenschaufel aus dieser austritt und sich dabei mit dem in der Turbineneinheit geführten Arbeitsmedium vermischt.

Auf diese Weise ist mit vergleichsweise einfachen Mitteln ein zuverlässiges Kühlsystem für die Turbinenschaufel bereitstellbar, wobei auch thermisch besonders belastete Zonen der Turbinenschaufel geeignet mit Kühlmittel beaufschlagbar sind. Andererseits ist jedoch bei der Einleitung der Kühlluft in das in der Turbineneinheit geführte Arbeitsmedium darauf zu achten, daß ihre charakteristischen Parameter wie Druck und Temperatur mit den entsprechenden Parametern des Arbeitsmediums vereinbar oder kompatibel sind. Insbesondere ist die zulässige Aufheizung der Kühlluft bei der Kühlung der Turbinenschaufeln nur begrenzt, so daß gerade bei vergleichsweise hohen angestrebten Austrittstemperaturen des Arbeitsmediums eine besonders große Menge an Kühlluft erforderlich ist. Dies wirkt sich wiederum begrenzend auf den Wirkungsgrad der Gasturbine aus.

Eine aus diesen Gründen wünschenswerte Einsparung an Kühlluftbedarf ist erreichbar, indem das Kühlsystem als geschlossenes Kühlsystem ausgebildet ist. Bei einem derartigen geschlossenen Kühlsystem wird die verbrauchte Kühlluft in den Verbrennungsprozeß zurückgeführt. Gerade bei einem derartigen geschlossenen Kühlsystem, bei dem die Kühlluft einem vergleichsweise hohen Druckverlust unterliegen kann, ist jedoch üblicherweise eine orts- und bedarfsangepaßte Bereitstellung von Kühlluft mit abhängig von der vorgesehenen Einspeisestelle vergleichsweise hohem Druck erforderlich. Dabei ist unter anderem auch der Druckverlust bei der Führung der Kühlluft durch ein geschlossenes System zu berücksichtigen. Gerade bei vergleichsweise lang ausgedehnten Systemen kann der Druckverlust in erheblichem Maße zu den Anforderungen an die bereitzustellende Kühlluft betragen. Gerade die Bereitstellung von Kühlluft mit vergleichsweise hohem Druck bedingt jedoch eine vergleichsweise aufwendige Konstruktion der zugeordneten Systeme, wobei insbesondere bei hohen Druckanforderungen der zur Bereitstellung der Kühlluft erforderliche Kühlluftverdichter je nach Betriebsbedingungen die durch die geschlossene Kühlung erreichbaren Wirkungsgrad- oder Leistungsvorteil teilweise oder sogar ganz kompensieren kann.

Aus der JP 8 284 687 ist ein solcher Kühlluftkreislauf für eine Gasturbine bekannt, bei der die Kühlluft zur Kühlung der Turbinenschaufeln eingesetzt wird. Anschließend wird die Kühlluft der Gasturbine durch ein Entnahmerohr entnommen und einem Wärmetauscher zugeführt, in welchem ihre Temperatur gesenkt wird. Anschließend wird der Druck der gekühlten Kühlluft mittels einer Pumpe erhöht. Ein erster Anteil der druckerhöhten gekühlten Kühlluft wird dann den Leitschaufeln der vorderen Turbinenstufen zum Kühlen dieser und anschließend zum Schließen des Kühlluftkreislaufes dem Wärmetauscher zugeführt. Ein zweiter Anteil der im Druck erhöhten gekühlten Kühlluft wird durch ein Rohrleitungssystem in den Bereich des Rotors der Gasturbine geführt. Das Rohrleitungssystem steht mit einem Luftabscheider und weiter stromab mit den Laufschaufeln der Turbine in Strömungsverbindung, so dass der zweite Anteil der Kühlluft die Laufschaufeln kühlt. Anschließend wird die Kühlluft der der Laufschaufel nachgeordneten Leitschaufel zum Schließen des Kühlkreislaufes zugeführt.

Ferner ist aus der US 4,338,780 ein Verfahren zum Kühlen einer Turbine bekannt, bei der die zur Kühlung von Laufschaufeln eingesetzte Verdichterluft durch das Eindüsen einer Flüssigkeit gekühlt wird. Dabei erfolgt die Eindüsung von Wasser vor der ersten Verwendung der Verdichterluft als Kühlluft.

Der Erfindung liegt daher die Aufgabe zugrunde, eine Gasturbine der oben genannten Art anzugeben, bei der bei einer zuverlässigen Kühlung der Turbinenschaufeln der Kühlluftbedarf besonders gering gehalten ist. Weiterhin soll ein für einen insgesamt vergleichsweise geringen Kühlluftbedarf besonders geeignetes Verfahren zum Betreiben einer derartigen Gasturbine angegeben werden.

Bezüglich der Gasturbine wird diese Aufgabe erfindungsgemäß gelöst, indem die eine erste Schaufelreihe bildenden Turbinenschaufeln und die eine diese in Strömungsrichtung des Arbeitsmediums gesehen nachgeordnete zweite Schaufelreihe bildenden Turbinenschaufeln kühlluftseitig unter Zwischenschaltung einer Eindüseinrichtung für Wasser hintereinandergeschaltet sind.

Die Erfindung geht dabei von der Überlegung aus, daß der Bedarf an Kühlluft für eine zuverlässige Kühlung der Turbinenschaufeln besonders gering gehalten werden kann, indem die Kühlluft in besonders intensivem Maße zur Kühlung der Turbinenschaufeln herangezogen wird. Im Hinblick auf den erforderlichen Betriebsdruck der Kühlluft ist dies insbesondere möglich für die ohnehin unter vergleichsweise hohem Druck bereitzustellende Kühlluft für die in Strömungsrichtung des Arbeitsmediums gesehen vergleichsweise weit vorn liegende Turbinenschaufelreihen. Die Kühlluft für diese Turbinenschaufelreihen ist aus betrieblichen Gründen unter einem derartig hohen Druck bereitzustellen, daß dieses Druckniveau auch unter Berücksichtigung vergleichsweise hoher Druckverluste bei der Schaufelkühlung zur Führung der Kühlluft über eine Mehrzahl von kühlluftseitig hintereinander geschalteten Turbinenschaufeln oder Schaufelreihen ausreicht.

Um dieses Druckpotential auszunutzen, ist vorgesehen, den in der aus der ersten, nunmehr gekühlten Schaufelreihe abströmenden Kühlluft noch zur Verfügung stehenden Druck zur Bespeisung der zweiten, noch zu kühlenden Schaufelreihe heranzuziehen. Dabei ist allerdings zu berücksichtigen, daß die aus der ersten Schaufelreihe abströmende Kühlluft durch die Kühlung der ersten Schaufelreihe aufgeheizt ist. Um diese Kühlluft dennoch zur Kühlung auch der zweiten Schaufelreihe heranziehen zu können, ist eine Zwischenkühlung der Kühlluft vor ihrem Eintritt in die zweite Schaufelreihe vorgesehen. Dazu wird unter Beibehaltung des Drucks der Kühlluft deren Temperatur derart abgesenkt, daß eine erneute Verwendung als Kühlluft in der nächsten Schaufelreihe ermöglicht ist. Die Zwischenkühlung erfolgt dabei durch Eindüsung von Wasser, wobei die Auslässe der Kühlluftkanäle der die in Strömungsrichtung des Arbeitsmediums gesehen erste Schaufelreihe bildenden Turbinenschaufeln unter Zwischenschaltung einer Eindüseinrichtung für Wasser mit den Einlässen der Kühlluftkanäle der die in Strömungsrichtung des Arbeitsmediums gesehen nachgeordnete Schaufelreihe bildenden Turbinenschaufeln verbunden sind.

Vorteilhafterweise ist eine derartige Mehrfachnutzung der Kühlluft für die Kühlung von Leitschaufeln der Gasturbine vorgesehen. Dazu sind die erste und die zweite Schaufelreihe jeweils als Leitschaufelreihe von einer Anzahl von mit einem Turbinengehäuse der Gasturbine verbundenen Leitschaufeln gebildet. Die Kühlluftführung erfolgt dabei zweckmäßigerweise zwischen den Leitschaufelreihen durch ein in das Turbinengehäuse integriertes Kanalsystem, wobei im Turbinengehäuse auch die Wassereindüsung angeordnet ist.

In alternativer oder zusätzlicher vorteilhafter Weiterbildung ist eine derartige Mehrfachnutzung von Kühlluft aber auch für Laufschaufelreihen der Gasturbine vorgesehen. Dazu sind zweckmäßigerweise die erste und die zweite Schaufelreihe jeweils als Laufschaufelreihe von einer Anzahl von an einer Turbinenwelle der Gasturbine angeordneten Laufschaufeln gebildet. In diesem Fall ist das Kanalsystem zur Führung der Kühlluft zweckmäßigerweise in die Turbinenwelle integriert.

In besonders vorteilhafter Ausgestaltung ist sowohl für die Kühlluft für die Laufschaufeln der Gasturbine als auch für die Kühlluft für die Leitschaufeln der Gasturbine eine derartige Mehrfachnutzung vorgesehen. Dazu sind in besonders vorteilhafter Weiterbildung sowohl in Strömungsrichtung des Arbeitsmediums gesehen aufeinanderfolgende Laufschaufelreihen als auch in Strömungsrichtung des Arbeitsmediums gesehen aufeinander folgende Leitschaufelreihen jeweils unter Zwischenschaltung einer zugeordneten Eindüseinrichtung für Wasser kühlluftseitig hintereinander geschaltet.

Zwischen den derartig kühlmittelseitig hintereinandergeschalteten Schaufelreihen erfolgt die Führung der Kühlluft im wesentlichen in der Art einer geschlossenen Kühlung. Um aber auch eine zuverlässige Kühlung besonders kritischer Bereiche einzelner Turbinenschaufeln sicher zu ermöglichen, ist vorteilhafterweise eine bedarfsgerechte Ausleitung eines Teils der Kühlluft in der Art einer offenen Kühlung in besonders betroffenen Bereichen einzelner oder aller Turbinenschaufeln vorgesehen. Dazu weist zweckmäßigerweise eine Anzahl der Turbinenschaufeln im Bereich der in Strömungsrichtung des Arbeitsmediums gesehen hinteren Kante ihres Schaufelblatts eine Anzahl von Kühlluftauslässen auf. Dies ist auch im Hinblick auf das Druckniveau der in den Turbinenschaufeln geführten Kühlluft gerade für die in Strömungsrichtung des Arbeitsmediums gesehen vergleichsweise weit hinten angeordneten Turbinenschaufeln ohne weiteres möglich, da das Druckgefälle im Strömungskanal des Arbeitsmediums der Gasturbine bis zu 12 bar betragen kann und somit größer ist als der Druckverlust im Kühlluftkanal selbst bei kühlmittelseitig hintereinandergeschalteten Turbinenschaufeln.

Bezüglich des Verfahrens wird die genannte Aufgabe gelöst, indem die aus den die erste Schaufelreihe bildenden Turbinenschaufeln abströmende Kühlluft durch Eindüsen von Wasser zwischengekühlt und anschließend den Kühlluftkanälen der die zweite Schaufelreihe bildenden Turbinenschaufeln zugeführt wird.

Vorteilhafterweise wird ein derartiges für eine im wesentlichen geschlossene Kühlung ausgelegtes Kühlkonzept kombiniert mit einer bedarfsgerecht angepaßten offenen Kühlung für thermisch besonders beaufschlagte Bereiche der Turbinenschaufeln. Dazu wird zweckmäßigerweise innerhalb einer Turbinenschaufel ein Teilstrom der diese durchströmenden Kühlluft abgezweigt und über eine Anzahl von im Bereich der in Strömungsrichtung des Arbeitsmediums gesehen hinteren Kante ihres Schaufelblatts angeordneten Kühlluftauslässen dem Arbeitsmedium beigemischt.

Die mit der Erfindung erzielten Vorteile bestehen insbesondere darin, daß durch die kühlmittelseitige Hintereinanderschaltung mehrerer Turbinenschaufeln unter Zwischenkühlung der Kühlluft durch Eindüsung von Wasser eine besonders wirkungsvolle Nutzung der ohnehin unter vergleichsweise hohem Druck bereitzustellenden Kühlluft für die in Strömungsrichtung des Arbeitsmediums gesehen vergleichsweise weit vorne liegenden Schaufelreihen ermöglicht ist. Dabei kann die derartig unter hohem Druck stehende und somit vergleichsweise "hochwertige" Kühlluft einer Mehrfachnutzung unterzogen werden, so daß der Kühlluftverbrauch insgesamt besonders gering gehalten ist. Insbesondere ist dadurch eine Bereitstellung separat komprimierter Kühlluft für vergleichsweise weiter hinten liegende Schaufelreihen nicht erforderlich.

Eine derartige Mehrfachverwendung der Kühlluft kann für lediglich zwei oder auch für drei oder mehr in Strömungsrichtung des Arbeitsmediums gesehen einander nachfolgender Schaufelreihen vorgesehen sein. Die Mehrfachverwendung der Kühlluft unter Nutzung des auch in der aus der ersten Schaufelreihe abströmenden Kühlluft noch verfügbaren Drucks ist insbesondere deswegen ermöglicht, da insgesamt entlang des Strömungskanals für das Arbeitsmedium innerhalb der Gasturbine ein Druckgefälle von etwa 12 bar besteht.

Durch die bedarfsweise Ausleitung einer Teilmenge der Kühlluft zur Bespeisung vergleichsweise thermisch stark beaufschlagter Regionen einzelner Turbinenschaufeln in der Art einer offenen Kühlung entsteht weiterhin eine im wesentlichen in sich geschlossene aber insgesamt offene Luftkühlung, bei der lediglich der Kühlluftverbrach in der ersten Schaufelreihe anfällt, wohingegen der zusätzliche Verbrauch an Kühlluft in den folgenden Schaufelreihen entfällt.

Ein Ausführungsbeispiel der Erfindung wird anhand einer Zeichnung näher erläutert. Darin zeigen:
- Figur 1: einen Halbschnitt durch eine Gasturbine, und
- Figur 2: einen Ausschnitt aus einem Längsschnitt der Gasturbine nach Figur 1 mit der Darstellung von Kühlkanälen.

Gleiche Teile sind in beiden Figuren mit den selben Bezugszeichen versehen.

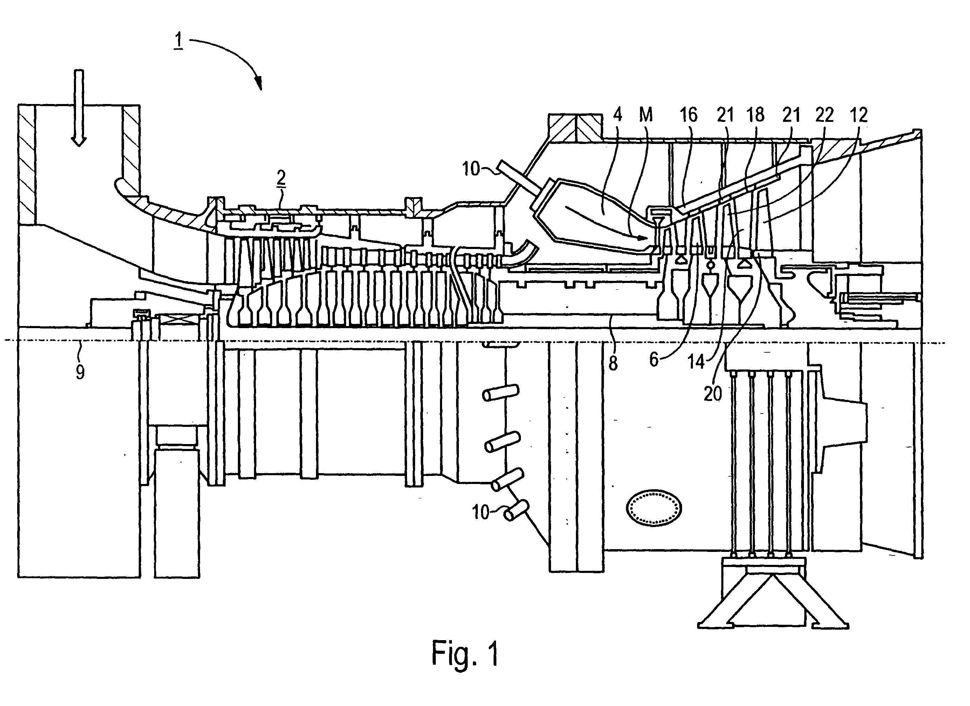

Die Gasturbine 1 gemäß Figur 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfaßt die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch viergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 19 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand 16 oder andere Gehäuse-Einbauteile vor einer thermischen Überbeanspruchung durch das die Turbine 6 durchströmende heiße Arbeitsmedium M schützt.

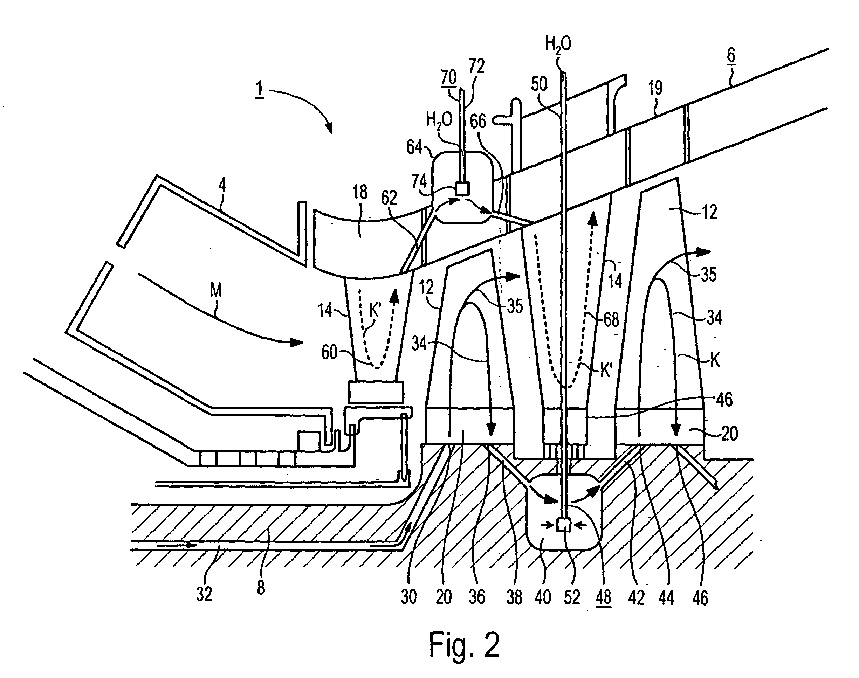

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1300 °C ausgelegt. Um dies zu ermöglichen, sind zumindest einige der Laufschaufeln 12 und der Leitschaufeln 14 durch Kühlluft als Kühlmedium kühlbar ausgelegt. Zur Verdeutlichung des Strömungsweges der Kühlluft ist der der Brennkammer 4 unmittelbar folgende Bereich der Gasturbine 1 in Figur 2 im Ausschnitt vergrößert dargestellt. Dabei ist erkennbar, daß das aus der Brennkammer 4 abströmende Arbeitsmedium M zunächst auf eine Anzahl von Leitschaufeln 14 trifft, die die sogenannte erste Leitschaufelreihe bilden und über ihre jeweilige Plattform 18 in die Brennkammer 4 eingehängt sind. In Strömungsrichtung des Arbeitsmediums M gesehen folgen sodann die die erste Laufschaufelreihe bildenden Laufschaufeln 12, die die zweite Laufschaufelreihe bildenden Leitschaufeln 14, sowie die die zweite Laufschaufelreihe bildenden Laufschaufeln 12.

Um einen besonders hohen Wirkungsgrad der Gasturbine 1 zu ermöglichen, sind zumindest die die erste Laufschaufelreihe und die zweite Laufschaufelreihe bildenden Laufschaufeln 12 sowie die die erste Leitschaufelreihe und die zweite Leitschaufelreihe bildenden Leitschaufeln 14 für eine im wesentlichen in sich geschlossene Luftkühlung, d. h. für eine kontrollierte Abführung "verbrauchter" Kühlluft K, ausgelegt. Um den Bedarf an Kühlluft K dabei insgesamt besonders gering zu halten, sind sowohl die Laufschaufelreihen als auch die Leitschaufelreihen in jeweils getrennten Kühlluftsystemen kühlmittelseitig hintereinandergeschaltet.

Dazu weist einerseits jede der die erste Laufschaufelreihe bildenden Laufschaufeln 12 in ihrer ihren Schaufelfuß bildenden Plattform 20 jeweils einen Einlaß 30 für Kühlluft K als Kühlmedium auf. Der Einlaß 30 ist dabei mit einem in der Turbinenwelle 8 geführten integrierten Kanalsystem 32 verbunden, über das der jeweilige Einlaß 30 mit Kühlluft K bespeisbar ist. Innerhalb der jeweiligen Laufschaufel 12 ist ein nicht näher dargestellter Kühlmittelkanal, insbesondere in Form eines Mäander, angeordnet, der mit dem Einlaß 30 in Verbindung steht. Zur Bildung eines durch den Pfeil 34 angedeuteten Strömungswegs für die Kühlluft K ist der Kühlmittelkanal dabei derart mäanderförmig geführt, daß im wesentlichen sämtliche Raumbereiche der jeweiligen Laufschaufel 12 ausreichend kühlbar sind. Zusätzlich zweigt vom Kühlmittelkanal ein durch den Pfeil 35 angedeutetes Teilkanalsystem ab, über das eine Teilmenge der Kühlluft K in der Art einer offenen Kühlung aus der jeweiligen Laufschaufel 12 ausleitbar ist. Durch diese vergleichsweise gering gehaltene Teilmenge der Kühlluft K erfolgt eine zuverlässige Kühlung thermisch vergleichsweise hoch belasteter Bereiche der jeweiligen Laufschaufel 12.

Der in die jeweilige Laufschaufel 12 integrierte eigentliche Kühlmittelkanal mündet hingegen in der Art einer im wesentlichen geschlossenen Kühlung ausgangsseitig in einem ebenfalls im Bereich der Plattform 20 und der Turbinenwelle 8 angeordneten Auslaß 36. Die Auslässe 36 der die in Strömungsrichtung des Arbeitsmediums M gesehen ersten Laufschaufelreihe bildenden Laufschaufeln 12 kommunizieren über einen jeweils zugeordneten Abströmkanal 38 mit einer gemeinsamen, in die Turbinenwelle 8 integrierten Vorlagekammer 40, in die die aus der ersten Laufschaufelreihe abströmende Kühlluft K gelangt. In Längsrichtung der Turbinenwelle 8 gesehen ist die Vorlagekammer 40 dabei im Bereich der zweiten Leitschaufelreihe angeordnet. Aufgrund des vergleichsweise hohen Drucks, mit dem die Kühlluft K in die erste Laufschaufelreihe eingespeist wurde, steht auch die aus der ersten Laufschaufelreihe abströmende Kühlluft K noch unter vergleichsweise hohem Druck. Um dieses Druckniveau gewinnbringend zu nutzen, ist eine Weiterverwendung der in die Vorlagekammer 40 gelangenden, in der ersten Laufschaufelreihe eigentlich "verbrauchten" Kühlluft K zur Kühlung der die in Strömungsrichtung des Arbeitsmediums M gesehen zweiten Laufschaufelreihe bildenden Laufschaufeln 12 vorgesehen.

Dazu kommuniziert die Vorlagekammer 40 ihrerseits über einen jeweils zugeordneten Zuströmkanal 42 mit einem Einlaß 44 für Kühlluft K jeder der die zweite Laufschaufelreihe bildenden Leitschaufeln 12. Der Einlaß 44 ist dabei ebenfalls in der den Schaufelfuß der jeweiligen Laufschaufel 12 bildenden Plattform 20 angeordnet. Der Einlaß 44 steht weiterhin ebenfalls mit einem innerhalb der jeweiligen Laufschaufel 12 angeordneten, ebenfalls nicht näher dargestellten Kühlmittelkanal in Verbindung. Auch in den die zweite Laufschaufelreihe bildenden Laufschaufeln 12 ist der Kühlmittelkanal jeweils mäanderförmig geführt, so daß im wesentlichen sämtliche Raumbereiche der jeweiligen Laufschaufel 12 ausreichend kühlbar sind, wie dies auch hier durch den Pfeil 34 angedeutet ist. Auch bei diesen Laufschaufeln 12 ist, wie durch den Pfeil 35 dargestellt eine bedarfsweise teilweise Ausleitung eines Teilstroms der Kühlluft K in der Art einer offenen Kühlung im Bereich thermisch besonders beaufschlagter Zonen vorgesehen. Der jeweilige Kühlmittelkanal der die zweite Laufschaufelreihe bildenden Laufschaufeln 12 mündet ausgangsseitig in einem ebenfalls im Bereich der Plattform 20 und der Turbinenwelle 8 angeordneten Auslaß 46. Dieser Auslaß 46 kann je nach Auslegung mit einer weiteren Vorlagekammer kommunizieren oder auch in ein Ableitsystem für verbrauchte Kühlluft K münden.

Die die in Strömungsrichtung des Arbeitsmediums M gesehen erste Laufschaufelreihe bildenden Laufschaufeln 12 und die die in Strömungsrichtung des Arbeitsmediums M gesehen nachgeordnete oder zweite Laufschaufelreihe bildenden Laufschaufeln 12 sind somit kühlluftseitig in Reihe geschaltet. Auf diese Weise ist eine Weiternutzung der aus der ersten Laufschaufelreihe abströmenden Kühlluft K zur Kühlung der zweiten Laufschaufelreihe ermöglicht, zumal das Druckniveau der aus der ersten Laufschaufelreihe abströmenden Kühlluft K für eine Führung der Kühlluft K über die zweite Laufschaufelreihe ohne weiteres ausreicht. Allerdings erfährt die Kühlluft K in der ersten Laufschaufelreihe durch deren Kühlung eine Aufheizung.

Um die aus der ersten Laufschaufelreihe abströmende Kühlluft K für eine weitere Kühlung, nämlich eine Kühlung der zweiten Laufschaufelreihe, nutzbar zu machen, ist eine Zwischenkühlung der Kühlluft K in der Vorlagekammer 40 vorgesehen.

Dazu ist die Vorlagekammer 40 mit einer Eindüseinrichtung 48 für Wasser H₂O versehen. Die Eindüseinrichtung 48 umfaßt dabei eine in nicht näher dargestellter Weise an eine Wasserversorgung angeschlossene Zuführleitung 50, die von einem Bereich außerhalb des Turbinengehäuses 6 durch eine der Vorlagekammer 40 gegenüberliegende Leitschaufel 14 bis in die Vorlagekammer 40 hineingeführt ist. An ihrem Auslaßende weist die Zuführleitung 50 einen Düsenkopf 52 auf, über dessen auslaßseitige Bohrungen in der Zuführleitung 50 geführtes Wasser H₂O in die Vorlagekammer 40 eindüsbar ist. Durch die Eindüsung des Wassers H₂O in die Vorlagekammer 40 ist somit eine Rückkühlung der aus der ersten Laufschaufelreihe abströmenden Kühlluft K ermöglicht, so daß diese mit einer für eine Kühlung der zweiten Laufschaufelreihe ausreichend niedrigen Temperatur in die zweite Laufschaufelreihe eintreten kann.

In analoger Weise ist auch eine Mehrfachnutzung der Kühlluft K' für die Leitschaufeln 14 der Gasturbine 1 vorgesehen. Dazu sind die die in Strömungsrichtung des Arbeitsmediums M gesehen erste Leitschaufelreihe bildenden Leitschaufeln 14 jeweils mit einem durch ihre jeweilige Plattform 18 geführten, nicht näher dargestellten Eintrittskanal für Kühlluft K' versehen. In jeder der die erste Leitschaufelreihe bildenden Leitschaufeln 14 ist ein nicht näher dargestellter Kühlmittelkanal, insbesondere in Form eines Mäanders, angeordnet, der mit dem jeweiligen Zuführkanal in Verbindung steht. Zur Bildung eines durch den gestrichelten Pfeil 60 angedeuteten Strömungswegs für die Kühlluft K' ist der Kühlmittelkanal dabei derart mäanderförmig geführt, daß sämtliche Raumbereiche der jeweiligen Leitschaufel 14 ausreichend kühlbar sind. Der jeweilige Kühlmittelkanal mündet dabei ausgangsseitig in einem ebenfalls in der Plattform 18 angeordneten Kühlluftkanal 62.

Die Kühlluftkanäle 62 der die erste Leitschaufelreihe bildenden Leitschaufeln 14 münden ausgangsseitig in eine ringförmig im Turbinengehäuse 6 angeordnete Vorlagekammer 64. Von dieser Vorlagekammer 64 gehen Zuführkanäle 66 für Kühlluft K' aus, von denen jeder jeweils in einer der die in Strömungsrichtung des Arbeitsmediums M gesehen zweite Leitschaufelreihe bildenden Leitschaufeln 14 mündet. Jede dieser Leitschaufeln 14 weist ebenfalls einen nicht näher dargestellten integrierten Kühlmittelkanal in Form eines Mäanders auf, so daß sich wiederum ein durch den gestrichelten Pfeil 68 angedeuteter Strömungsweg in der jeweiligen Leitschaufel 14 ergibt. Ausgangsseitig ist die aus den die zweite Leitschaufelreihe bildenden Leitschaufeln 14 abströmende Kühlluft K' in nicht näher dargestellter Weise geeignet abgeführt.

Um auch für die Leitschaufeln 14 eine derartige Mehrfachnutzung der Kühlluft K' zu ermöglichen, ist ebenfalls eine Zwischenkühlung der Kühlluft K' in der Vorlagekammer 64 vorgesehen. Dazu ist auch die Vorlagekammer 64 mit einer Eindüseinrichtung 70 für Wasser H₂O versehen. Diese umfaßt eine ebenfalls mit der nicht näher'dargestellten Wasserversorgung verbundene Zuführleitung 72, deren ausgangsseitiges, mit einem Düsenkopf 74 versehenes Ende im Inneren der Vorlagekammer 64 angeordnet ist.

Beim Betrieb der Gasturbine 1 werden sowohl die Laufschaufeln 12 als auch die Leitschaufeln 14 jeweils geeignet mit Kühlluft K bzw. K' beaufschlagt. Dabei wird die in Strömungsrichtung des Arbeitsmediums M gesehen jeweils erste Laufschaufel- bzw. Leitschaufelreihe jeweils mit "frischer" Kühlluft K bzw. K' beaufschlagt, die aus betrieblichen Gründen unter vergleichsweise hohem Druck steht. Nach dem Abströmen aus der jeweils ersten Schaufelreihe weist die "verbrauchte" und teilweise aufgewärmte Kühlluft K bzw. K' immer noch ein vergleichsweise hohes Druckniveau auf. Um dieses Druckniveau wirkungsgrad- und leistungssteigernd für die Gasturbine 1 zu nutzen, erfolgt eine Weiterverwendung der Kühlluft K bzw. K' für eine jeweils nachgeordnete Laufschaufel- bzw. Leitschaufelreihe. Um dies zu ermöglichen, ist eine Absenkung des Temperaturniveaus der bereits genutzten Kühlluft K bzw. K' auf ein für weitere Kühlzwecke geeignetes Temperaturniveau vorgesehen. Dazu erfolgt eine Eindüsung von Wasser H₂O in die jeweilige Vorlagekammer 40 bzw. 64, die eine Zwischenkühlung der jeweiligen Kühlluft K bzw. K' bewirkt. Die solchermaßen zwischengekühlte Kühlluft K, K' wird sodann den Kühlmittelkanälen der die in Strömungsrichtung des Arbeitsmediums M gesehen jeweils nachgeordnete Schaufelreihe bildenden Laufschaufeln 12 bzw. Leitschaufeln 14 zugeführt. Durch eine derartige Mehrfachnutzung der Kühlluft K, K' entfällt die Notwendigkeit einer separaten Bespeisung der jeweils nachgeordneten Schaufelreihe mit Kühlluft K bzw. K'. Dadurch ist eine zuverlässige Kühlung der Laufschaufeln 12 bzw. der Leitschaufeln 14 mit nur geringem Kühlluftverbrauch ermöglicht.

Um bei diesem in sich geschlossenen Kühlungssystem eine bedarfsgerechte besonders intensive Kühlung vergleichsweise stark thermisch belasteter Zonen zu gewährleisten, wird zudem bedarfsweise in den Laufschaufeln 12 und/oder in den Leitschaufeln 14 jeweils eine Teilmenge der dort geführten Kühlluft K bzw. K' abgezweigt und in der Art einer offenen Teilkühlung an der in Strömungsrichtung des Arbeitsmediums M gesehen hinteren Kante des Schaufelblatts der jeweiligen Laufschaufel 12 bzw. der jeweiligen Leitschaufel 14 aus dieser herausgeführt und dem Arbeitsmedium M beigemischt.

## Patentansprüche

1. Gasturbine (1) mit einer Anzahl von jeweils zu Schaufelreihen zusammengefaßten Turbinenschaufeln (12, 14), die jeweils einen integrierten Kühlluftkanal aufweisen, wobei die eine erste Schaufelreihe bildenden Turbinenschaufeln (12, 14) und die eine dieser in Strömungsrichtung des Arbeitsmediums (M) gesehen nachgeordnete zweite Schaufelreihe bildenden Turbinenschaufeln (12, 14) kühlluftseitig unter Zwischenschaltung einer Eindüseinrichtung (48, 70) für Wasser (H₂O) hintereinandergeschaltet sind.

2. Gasturbine (1) nach Anspruch 1, bei der die erste und die zweite Schaufelreihe jeweils als Leitschaufelreihe von einer Anzahl von mit einem Turbinengehäuse (6) verbundenen Leitschaufeln (14) gebildet sind.

3. Gasturbine (1) nach Anspruch 1, bei der die erste und die zweite Schaufelreihe jeweils als Laufschaufelreihe von einer Anzahl von an einer Turbinenwelle (8) angeordneten Laufschaufeln (12) gebildet sind.

4. Gasturbine (1) nach einem der Ansprüche 1 bis 3, bei der sowohl in Strömungsrichtung des Arbeitsmediums (M) gesehen aufeinanderfolgende Laufschaufelreihen als auch in Strömungsrichtung des Arbeitsmediums (M) gesehen aufeinanderfolgende Leitschaufelreihen jeweils unter Zwischenschaltung einer zugeordneten Eindüseinrichtung (48, 70) für Wasser kühlluftseitig hintereinandergeschaltet sind.

5. Gasturbine (1) nach einem der Ansprüche 1 bis 4, bei der eine Anzahl der Turbinenschaufeln (12, 14) im Bereich der in Strömungsrichtung des Arbeitsmediums (M) gesehen hinteren Kante ihres Schaufelblatts eine Anzahl von Kühlluftauslässen aufweist.

6. Verfahren zum Betreiben einer Gasturbine (1) nach einem der Ansprüche 1 bis 5, bei dem die aus den die erste Schaufelreihe bildenden Turbinenschaufeln (12, 14) abströmende Kühlluft (K, K') durch Eindüsen von Wasser (H₂O) zwischengekühlt und anschließend den Kühlluftkanälen der die zweite Schaufelreihe bildenden Turbinenschaufeln (12) zugeführt wird.

7. Verfahren nach Anspruch 6, bei dem innerhalb einer Turbinenschaufel ein Teilstrom der diese durchströmenden Kühlluft (K, K') abgezweigt und über eine Anzahl von im Bereich der in Strömungsrichtung des Arbeitsmediums (M) gesehen hinteren Kante ihres Schaufelblatts angeordneten Kühlluftauslässen dem Arbeitsmedium (M) beigemischt wird.

## Claims

1. Gas turbine (1), having a number of turbine blades/vanes (12, 14) respectively combined to form blade/vane rows, each of which turbine blades/vanes (12, 14) has an integrated cooling air duct, the turbine blades/vanes (12, 14) forming a first turbine blade/vane row and the turbine blades/vanes (12, 14) forming a second blade/vane row downstream thereof, viewed in the flow direction of the working medium (M), being connected one behind the other on the cooling air side with the intermediate connection of an injection device (48, 70) for water (H₂O).

2. Gas turbine (1) according to Claim 1, in which the first and the second blade/vane rows are respectively formed as a guide vane row by a number of guide vanes (14) connected to a turbine casing (6).

3. Gas turbine (1) according to Claim 1, in which the first and the second blade/vane rows are respectively formed as a rotor blade row by a number of rotor blades (12) arranged on a turbine shaft (8).

4. Gas turbine (1) according to one of Claims 1 to 3, in which both rotor blade rows following one another, viewed in the flow direction of the working medium (M), and guide vane rows following one another, viewed in the flow direction of the working medium (M), are connected one behind the other on the cooling air side, in each case with the intermediate connection of an associated injection device (48, 70) for water.

5. Gas turbine (1) according to one of Claims 1 to 4, in which a number of the turbine blades/vanes (12, 14) have a number of cooling air outlets in the region of the rear edge, viewed in the flow direction of the working medium (M), of their blade/vane aerofoils.

6. Method of operating a gas turbine (1) according to one of Claims 1 to 5, in which the cooling air (K, K') flowing out of the turbine blades/vanes (12, 14) forming the first blade/vane row is intercooled by the injection of water (H₂O) and is subsequently supplied to the cooling air ducts of the turbine blades/vanes (12) forming the second blade/vane row.

7. Method according to Claim 6, in which within a turbine blade/vane, a partial flow of the cooling air (K, K') flowing through this turbine blade/vane is branched off and mixed into the working medium (M) by means of a number of cooling air outlets arranged in the region of the rear edge, viewed in the flow direction of the working medium (M), of its blade/vane aerofoil.

## Revendications

1. Turbine (1) à gaz ayant un certain nombre d'aubes (12, 14) de turbines assemblées respectivement en rangées d'aubes qui ont respectivement un canal intégré d'air de refroidissement. Les aubes (12, 14) de turbines formant une première rangée d'aubes et les aubes (12, 14) de turbines formant une deuxième rangée d'aubes disposées derrière les premières considérées dans le sens du courant du fluide (M) de travail sont montées les unes derrière les autres du côté de l'air de refroidissement avec interposition d'un dispositif (48, 70) de projection d'eau (H₂O).

2. Turbine (1) à gaz suivant la revendication 1, dans laquelle la première et la deuxième rangée d'aubes sont formées respectivement en temps que rangées d'aubes directrices d'un certain nombre d'aubes (14) directrices reliées au fourreau (6) de la turbine.

3. Turbine (1) à gaz suivant la revendication 1, dans laquelle la première et la deuxième rangée d'aubes sont formées respectivement en tant que rangées d'aubes mobiles d'un certain nombre d'aubes (12) mobiles montées sur un arbre (8) de turbine.

4. Suivant l'une des revendications 1 à 3, dans laquelle tant des rangées d'aubes mobiles se succédant, considérées dans le sens du courant du fluide (M) de travail que dans des rangées d'aubes directrices se succédant, considérées dans le sens du courant du fluide (M) de travail, sont montées les unes derrières les autres du côté de l'air de refroidissement, avec respectivement interposition d'un dispositif (48, 70) associé d'injections d'eau.

5. Sur l'une des revendications 1 à 4, dans laquelle un certain nombre des aubes (12, 14) de la turbine a un certain nombre de sorties d'air de refroidissement dans la zone du bord arrière, considéré dans la direction du courant du fluide (M) de travail, de leur lame d'aube.

6. Procédé pour faire fonctionner une turbine (1) à gaz suivant l'une des revendications, dans lequel on refroidit intermédiairement l'air (K K') de refroidissement sortant des aubes (12, 14) de la turbine formant la première rangée d'aubes et on l'envoie ensuite aux canaux d'air de refroidissement des aubes (12) de la turbine formant la deuxième rangée d'aubes.

7. Procédé suivant la revendication 6, dans lequel on dérive à l'intérieur d'une aube de turbine un courant partiel de l'air( K K') de refroidissement qui passe et on le mélange au fluide (M) de travail par un certain nombre de sorties d'air de refroidissement disposées dans la zone du bord arrière, considéré dans le sens du courant du fluide (M) de travail, de sa lame d'aube.
